# EUROPÄISCHE PATENTSCHRIFT

(11) **EP 2 773 525 B1**
(45) Veröffentlichungstag und Bekanntmachung des Hinweises auf die Patenterteilung: **12.04.2017**
(21) Anmeldenummer: 12778232.4
(22) Anmeldetag: 05.10.2012
(51) Int. Cl.: B60L 11/18

(54) **LADEVORRICHTUNG ZUM INDUKTIVEN LADEN EINES ENERGIESPEICHERS EINES FAHRZEUGS**
CHARGER FOR INDUCTIVELY CHARGING AN ENERGY ACCUMULATOR OF A VEHICLE
DISPOSITIF DE CHARGEMENT POUR LE CHARGEMENT INDUCTIF D'UN ACCUMULATEUR D'ÉNERGIE D'UN VÉHICULE

(30) Priorität: 29.10.2011 DE 102011117332
(43) Veröffentlichungstag der Anmeldung: 10.09.2014
(73) Patentinhaber: Audi AG, 85045 Ingolstadt (DE)
(72) Erfinder: LIMBACHER, Reimund, 85055 Ingolstadt (DE); GEHRET, Johannes, 92342 Freystadt (DE)
(74) Vertreter: Herbst, Matthias Heinz
(86) Internationale Anmeldenummer: PCT/EP2012/004183
(87) Internationale Veröffentlichungsnummer: WO 2013/060413

(56) Entgegenhaltungen:
- EP-A1- 0 902 523
- JP-A- H1 075 535
- JP-A- H10 250 675
- JP-A- 2011 169 043

## Beschreibung

Die Erfindung betrifft eine Ladevorrichtung zum induktiven Laden eines Energiespeichers eines Fahrzeugs, umfassend ein mit einer Stromquelle verbundenes Primärladeteil und ein mit dem Energiespeicher zu verbindendes Sekundärladeteil.

Elektrofahrzeuge oder Hybridfahrzeuge umfassend einen Verbrennungsmotor und einen Elektromotor erfreuen sich zunehmender Beliebtheit. Solche Fahrzeuge umfassen entsprechend dimensionierte Batterien, die von Zeit zu Zeit zu laden sind. Der Ladevorgang kann über ein Ladekabel erfolgen, das beispielsweise an einer Ladesäule einer "Tankstelle" vorgesehen ist und an einen entsprechenden fahrzeugseitigen Ladeanschluss vom Kunden manuell anzuschließen ist. Dies ist jedoch zum Teil in der Handhabung umständlich, nicht zuletzt, als das Kabel relativ sperrig ist. Es ist ferner zeitaufwendig und insbesondere bei schlechten Witterungsbedingungen, Schmutz und ungünstiger Position von Ladesäule und Ladeanschluss am Fahrzeug nicht attraktiv.

Neben dem kabelgebundenen Laden ist es ferner bekannt, die Batterie des Fahrzeugs induktiv zu laden. Es kommt also eine induktive Ladevorrichtung zum Einsatz, umfassend ein Primärladeteil und ein Sekundärladeteil. Das Primärladeteil ist fahrzeugextern und stationär, während das Sekundärladeteil bei bekannten Lösungen fahrzeugseitig vorgesehen ist. Es besteht aus einer relativ großen, flächigen und schweren Baueinheit, die möglichst tief im Fahrzeugunterbodenbereich untergebracht wird. D. h., dass zur Integration des Sekundärladeteils ein erheblicher Bauraum im Unterflurbereich des Elektrofahrzeug oder des Hybridfahrzeugs benötigt wird. Gerade diese Fahrzeuge haben durch die Notwendigkeit der Unterbringung von großen Hochvolt-Traktionsbatterien beim Elektrofahrzeug bzw. von gleichzeitigem konventionellem Verbrennungsmotor und Elektroantrieb beim Hybridfahrzeug ohnehin einen erheblichen Bauraumbedarf für die relevanten Antriebskomponenten.

Mit der Integration des Sekundärladeteils mit einem Einzelgewicht von bis zu 100 kg erhöht sich ferner die Fahrzeuggesamtmasse deutlich, was sich nachteilig auf die Fahrleistung und die Energieeffizienz wie auch die Reichweite auswirkt.

Schließlich muss das Sekundärladeteil derart im Unterbodenbereich integriert werden, dass die Anforderungen an die normale Bodenfreiheit z. B. für Schlechtwegefahrten weiterhin erfüllt werden. Denn das Sekundärladeteil darf natürlich nicht aufsetzen. Nachdem die Primärladeteile, gerade im öffentlichen Bereich, meist bodenbündig realisiert werden, damit keine störenden Konturen nach oben überstehen, ergibt sich folglich ein relativ großer Luftspalt von 20 - 30 cm zwischen Primärladeteil und Sekundärladeteil, was zu einer deutlichen Verschlechterung des Ladewirkungsgrades führt. Auch können solche großen Luftspalte verstärkt zur Ausbildung von störenden elektromagnetischen Feldern im Umfeld des zu ladenden Fahrzeugs führen.

Die Druckschrift EP0902523 wird als nächstliegender Stand der Technik angesehen und offenbart die Merkmale der Präambel des unabhängigen Anspruchs1. Der Erfindung liegt damit die Aufgabe zugrunde, eine Ladevorrichtung anzugeben, die demgegenüber verbessert ist.

Zur Lösung dieses Problems ist erfindungsgemäß eine Ladevorrichtung vorgesehen, die sich dadurch auszeichnet, dass das Primärteil bodenseitig stationär und das in einer Haltevorrichtung aufgenommene Sekundärladeteils zwischen einer Nichtladestellung und einer Ladestellung bewegbar ist, wozu das Sekundärteil mittels einer Kopplungsvorrichtung beim Überfahren derart mechanisch und elektrisch lösbar mit dem Fahrzeug verbindbar ist, dass es zum Laden bei weiterer Überfahrt über das Primärteil in die Ladestellung und am Ende des Ladevorgangs beim Zurückfahren des Fahrzeugs in die Nichtladestellung unter Lösen der mechanischen und elektrischen Verbindung bewegbar ist.

Bei der erfindungsgemäßen Ladevorrichtung ist das Sekundärladeteil mit besonderem Vorteil nicht fest fahrzeugseitig integriert, sondern nur temporär mit dem Fahrzeug mechanisch und elektrisch koppelbar. Das Sekundärladeteil befindet sich benachbart zum Primärladeteil, das bodenseitig stationär angeordnet ist, bevorzugt bodenbündig integriert ist. Das Sekundärladeteil ist in einer geeigneten Haltevorrichtung angeordnet. Es ist, bezogen auf die Vorwärtsfahrtrichtung des zu ladenden Kraftfahrzeugs; kurz respektive unmittelbar vor dem Primärteil positioniert. Am Fahrzeug selbst ist lediglich eine Kopplungsvorrichtung vorgesehen, die es ermöglicht, dass fahrzeugexterne Sekundärteil temporär mit dem Fahrzeug zu koppeln. Dies geschieht auf einfache Weise dadurch, dass das Fahrzeug mit einer definierten Fahrrichtung über das Sekundärteil fährt. Mit Erreichen einer bestimmten Relativposition des Fahrzeugs und damit der Kopplungsvorrichtung zum Sekundärteil kommt es zur temporären Kopplung des Fahrzeugs bzw. der dortigen Kopplungsvorrichtung mit dem Sekundärteil, das bei weiterem Vorwärtsfahren des Fahrzeugs mitgenommen wird, also aus der Nichtladestellung bewegt wird. Es kommt zu einer Horizontalverschiebung oder -bewegung des Sekundärteils zusammen mit dem Fahrzeug. Während dieser Bewegung nähert es sich dem Primärteil, es wird bei Fortsetzen der Fahrt über das Primärteil bewegt, bis es in der Ladestellung ist, mithin also eine Position erreicht ist, in welcher die induktive Kopplung zwischen Primär- und Sekundärladeteil gegeben und der Ladevorgang durchgeführt werden kann. Das Erreichen dieser Position kann sensorisch erfasst und dem Fahrer angezeigt werden, damit er das Fahrzeug stoppt.

Ist der Ladevorgang beendet, so fährt das Fahrzeug in die entgegengesetzte Richtung, also rückwärts, während welcher Bewegung das Sekundärteil wiederum mitgenommen wird, mithin also aus seiner Überdeckung des Primärteils bewegt wird, bis es, wenn das Fahrzeug hinreichend weit zurückgefahren ist, wieder die Nichtladestellung erreicht. Mit Erreichen der Nichtladestellung wird bei weiterer Rückwärtsfahrt des Fahrzeugs automatisch die gegebene mechanische und elektrische Kopplung gelöst und das Sekundärteil wieder freigegeben.

D. h., dass bei der erfindungsgemäßen Ladevorrichtung nur eine temporäre Kopplung zwischen Sekundärteil und Fahrzeug gegeben ist, während welcher das Sekundärteil durch eine horizontale Bewegung über das Primärteil bewegt wird, um den Ladevorgang durchzuführen, bzw. aus diesem induktiv koppelnden Übergriff wieder zurück in die Nichtladestellung bewegt wird, wo es vom Fahrzeug wieder entkoppelt wird.

Der Fahrer ist also nicht gezwungen, selber manuell tätig zu werden, da die Kopplung mit dem Sekundärladeteil und die induktive Kopplung des Sekundärladeteils mit dem Primärladeteil durch eine üblicher Fahrbewegung des Kraftfahrzeugs erfolgt. Da das Sekundärladeteil nicht fahrzeugseitig verbaut ist, geht es folglich nicht nachteilig in das Fahrzeuggesamtgewicht ein. Auch ist fahrzeugseitig kein Bauraum durch das Sekundärladeteil belegt.

Ein weiterer beachtlicher Vorteil ist, dass infolge der Horizontalverschiebung des Sekundärladeteils von der Nichtladestellung in die Ladestellung über dem Primärladeteil der gegebene Luftspalt natürlich derart eingestellt werden kann, dass ein sehr guter Ladewirkungsgrad erreicht wird. Denn das Sekundärladeteil kann deutlich niedriger positioniert werden, als dies bei fahrzeugseitiger Integration der Fall wäre. Ein Luftspalt von nur wenigen Zentimetern, beispielsweise fünf Zentimetern oder weniger, ist ohne Weiteres realisierbar.

Das Primärladeteil und das Sekundärladeteil sind vorzugsweise plattenförmig ausgeführt, um möglichst große Flächen zu realisieren, mithin also einen großflächigen Übergriff zu schaffen, was für die Ladeeffizienz von Vorteil ist. Insbesondere ist auch ein effizientes Laden möglich, wenn das Sekundärladeteil nicht zu 100 % in Deckung mit dem Primärladeteil gebracht wird. Die Realisierung entsprechend großer plattenförmiger Ladeteile ist ohne Weiteres möglich, da das Primärladeteil ohnehin bevorzugt bodenbündig integriert ist und das Sekundärladeteil, da fahrzeugextern, nicht in seiner Größe aufgrund gegebenen fahrzeugseitigen Bauraums begrenzt ist.

Gemäß einer ersten Erfindungsalternative kann das Sekundärladeteil nach der mechanischen Verbindung mit der Kopplungsvorrichtung beim Weiterfahren aus der Haltevorrichtung gelöst und beim Zurückfahren wieder in die Haltevorrichtung übergeben werden. Gemäß dieser Erfindungsausgestaltung wird das Sekundärladeteil vollständig der Haltevorrichtung entnommen, wenn es mit dem Fahrzeug gekoppelt ist. D. h., dass nach dem Aufnehmen und Entnehmen des Sekundärladeteils diese keinen Kontakt mehr zur Haltevorrichtung hat, sondern ausschließlich vom Fahrzeug getragen wird. Zur Ermöglichung der Kopplung kann die Kopplungsvorrichtung zur mechanischen Verbindung ein oder mehrere erste Kopplungselemente aufweisen, das oder die mit einem oder mehreren am Sekundärladeteil vorgesehenen zweiten Kopplungselementen tragend zusammenwirken. Die Kopplungselemente, die zusammenwirken, sind also so auszugestalten, dass sie einerseits einfach miteinander verbindbar und wieder lösbar sind, andererseits, dass eine hinreichend stabile mechanische Verbindung gegeben ist, die sicherstellt, dass das doch beachtlich schwere Sekundärladeteil auch sicher getragen wird.

Die zusammenwirkenden Koppelelemente können hierzu beim Überfahren ineinandergreifen oder ineinandergeschoben werden. Hierzu ist es denkbar, dass ein erstes Kopplungselement als hinterschnittene Aufnahmeschiene und ein zweites Kopplungselement als T-förmige Eingriffsschiene, die mit ihrem T-förmigen Schienenabschnitt in die Aufnahmeschiene eingeführt wird, ausgeführt ist, oder umgekehrt. Es kommen hier also zwei längliche Schienen zum Einsatz, wobei die eine Schiene als hinterschnittene Aufnahmeschiene ausgeführt ist, mithin also im Querschnitt im Wesentlichen C-förmig, während die andere Schiene im Querschnitt T-förmig ist und mit ihrem T-förmigen Schienenabschnitt in die Aufnahmeschiene beim Überfahren eingeführt wird. Die Aufnahmeschiene kann beispielsweise fahrzeugseitig vorgesehen sein, mithin also das erste Kopplungselement darstellen, während die Eingriffsschiene an dem Sekundärladeteil angeordnet ist. Denkbar ist es aber natürlich auch, die C-förmige Aufnahmeschiene am Sekundärladeteil anzuordnen und die T-förmige Eingriffsschiene am Fahrzeug. In jedem Fall kann unter Verwendung solcher Kopplungselemente eine sichere mechanische Verbindung gewährleistet werden, die eine tragende Verbindung über die gesamte Schieneingriffslänge sicherstellt. Bevorzugt sind natürlich zwei solcher Schienenkopplungen vorgesehen, die eine im linken Bereich, die andere im rechten Bereich des Sekundärladeteils.

Nachdem die mechanische Kopplung für den Fahrer unsichtbar unterhalb des Fahrzeugs stattfindet, ist es besonders zweckmäßig, wenn an dem Kopplungselement, das das andere Kopplungselement umgreift oder aufnimmt, ein Einführabschnitt vorgesehen ist. Über diesen Einführabschnitt, beispielsweise eine entsprechende Erweiterung der C-förmigen Aufnahmeschiene im vorderen Endbereich, wird sichergestellt, dass das zweite Kopplungselement auch sicher "eingefädelt" wird. D. h., dass das Fahrzeug auch durchaus mit einem leichten Seitenversatz heranfahren kann, eine sichere mechanische Kopplung wird gleichwohl ermöglicht. Selbstverständlich ist das Sekundärladeteil derart an der Haltevorrichtung angeordnet, dass es in diesem Fall auch etwas seitlich verschoben werden kann, was der Fall ist, wenn die Kopplungsteile nicht exakt fluchtend ineinandergeführt werden.

Während die zuvor beschriebene Erfindungsalternative die komplette Entnahme des Sekundärladeteils von der Haltevorrichtung vorsieht, sieht eine alternative Erfindungsausgestaltung vor, das Sekundärladeteil in der Haltevorrichtung auf wenigstens einer Linearführung geführt zwischen der Nichtladestellung und der Ladestellung zu bewegen. Gemäß dieser Erfindungsausgestaltung ist also eine definierte Linearführung des Sekundärladeteils relativ zum Primärladeteil vorgesehen, das Sekundärladeteil ist also zu jedem Zeitpunkt infrastrukturell mit der Haltevorrichtung verbunden. Es wird gleichermaßen mechanisch mit entsprechenden Kopplungselementen am Fahrzeug gekoppelt, beim Bewegen aus der Ladestellung jedoch erfolgt keine tragende Übernahme, sondern lediglich eine quasi schiebende Bewegung des Sekundärladeteils längs der oder den Linearführungen bis zum Erreichen der Ladestellung. Beim Zurückbewegen des Fahrzeugs nach Beendigung des Ladevorgangs wird folglich das Sekundärladeteil längs der oder den Linearführungen wieder von dem Primärladeteil und horizontal in die Nichtladestellung zurückgezogen, wo dann die mechanische Kopplung wieder gelöst wird.

D. h., dass die Kopplungsvorrichtung zur mechanischen Verbindung ein oder mehrere erste Kopplungselemente aufweist, das oder die mit einem oder mehreren am Sekundärladeteil vorgesehenen zweiten Kopplungselementen schiebend oder ziehend zusammenwirken. Auf eine mechanisch tragende, also die Last des Sekundärladeteils aufnehmende Verbindung kommt es hier nicht an. Deshalb ist es möglich, die beiden Kopplungselemente auf einfache Weise zu verklemmen oder zu verrasten, d. h., sie gehen eine Klemm- oder Rastverbindung ein, die entsprechend leicht zu schließen wie auch zu lösen ist. Hierzu können beispielsweise am Sekundärladeteil ein oder zwei vertikal nach oben stehende Rastzapfen vorgesehen sein, die beim Heranfahren des Fahrzeugs seitlich von entsprechenden Rasthaken am Fahrzeug umgriffen werden, wonach das Sekundärladeteil auf einfache Weise horizontal über das Primärladeteil geschoben und in ebenso einfacher Weise wieder zurückgezogen werden kann. Mit Erreichen der Nichtladestellung und weiterem Zurückfahren wird der Rasteingriff automatisch wieder gelöst, wobei natürlich die Rastelemente wiederum so ausgelegt sind, dass eine Rastverbindung auch bei leichtem seitlichen Versatz möglich ist. Denkbar ist es hierbei, beispielsweise die Rastzapfen quasi "schwimmend" zu lagern, so dass diese seitlich versetzbar sind, wenn ihre Position nicht mit dem Rasthaken fluchtet.

In Weiterbildung der Erfindung weist die Haltevorrichtung zweckmäßigerweise einen Anschlag auf, gegen den das Sekundärladeteil beim Rückwärtsfahren bei Erreichen der Nichtladestellung läuft. Das Anschlagen an den Anschlag führt des Weiteren bei weiterem Rückwärtsfahren zum Lösen der Kopplung, indem beispielsweise die Aufnahmeschienen von den Eingriffsschienen heruntergezogen oder die Klemm- oder Rastverbindungen gelöst werden.

Zur elektrischen Verbindung zwischen dem Sekundärladeteil und einem entsprechenden fahrzeugseitigen Ladeanschluss ist bevorzugt wenigstens ein Kontakt, z. B. ein Schleifkontakt oder ein Federkontakt seitens der Kopplungsvorrichtung vorgesehen, der zur elektrischen Verbindung mit einem entsprechenden Kontakt am Sekundärladeteil zusammenwirkt. Denkbar ist aber natürlich auch die Anordnung des Schleif- oder Federkontakts am Sekundärladeteil, so dass der Kontakt bei Verbindung mit dem Fahrzeug an einem entsprechenden Gegenkontakt am Fahrzeug anliegt. D. h., dass hier keine feste elektrische Verbindung realisiert wird, sondern lediglich der Kontakt in Anlage zum Gegenkontakt gebracht wird, was sehr einfach zu realisieren ist.

Um sicherzustellen, dass einerseits eine korrekte mechanische und elektrische Kopplung gegeben ist, wie auch, dass eine entsprechende Trennung der Kopplungen gegeben ist, bevor das Fahrzeug wieder im Straßenverkehr bewegt wird, wird ein oder werden mehrere Sensorelemente zur Erfassung einer mechanischen und elektrischen Kopplung vorgesehen. Diese überwachen also, ob das Sekundärladeteil mechanisch korrekt aufgenommen wird, wie auch, ob der elektrische Ladekontakt zwischen Sekundärladeteil und Fahrzeug korrekt geschlossen wird, respektive im Falle der Rückführung in die Nichtladestellung die entsprechenden Verbindungen geöffnet werden. Diese Sensorelemente sind entweder fahrzeugseitig vorgesehen, oder sie befinden sich an dem Sekundärladeteil.

Bevorzugt befinden sie sich jedoch fahrzeugseitig, damit bei Erfassung einer nicht erfolgten mechanischen oder elektrischen Trennung bei Erreichen der Nichtladestellung ein Warnsignal ausgebbar und/oder ein die Fortsetzung der Rückwärtsfahrt verhinderndes Signal ausgebbar ist. Wird also nicht korrekt entkoppelt, so wird der Fahrer optisch und/oder akustisch gewarnt. Bevorzugt wird auch ein aktiver, fahrerunabhängiger und automatischer Eingriff in den Antriebsstrang vorgenommen, um ein weiteres Rückwärtsbewegen des Fahrzeugs zu verhindern, da dies zu einer Beschädigung der Ladevorrichtung führen kann.

Natürlich kann über das oder die Sensorelemente auch das fehlerhafte Schließen der mechanischen/elektrischen Kopplung erfasst werden und in diesem Fall ebenfalls eine entsprechende Signalisierung oder ein entsprechender Eingriff am Fahrzeug erfolgen. Denn der Fahrer benötigt ja in irgendeiner Weise eine Rückmeldung, sollte es zu einer Fehlfunktion im von ihm nicht einsehbaren Bereich kommen.

Weitere Vorteile, Merkmale und Einzelheiten der Erfindung ergeben sich aus den im Folgenden beschriebenen Ausführungsbeispiel sowie anhand der Zeichnung. Dabei zeigen:
- Fig. 1: eine Prinzipdarstellung einer erfindungsgemäßen Ladevorrichtung nebst Fahrzeug in einer Seitenansicht mit in der Nichtladestation befindlichem Sekundärladeteil,
- Fig. 2: die Ladevorrichtung aus Fig. 1 mit in der Ladestellung befindlichem Sekundärladeteil,
- Fig. 3: die Anordnung aus Fig. 2 in einer Frontansicht,
- Fig. 4: eine Prinzipdarstellung einer erfindungsgemäßen Ladevorrichtung nebst Fahrzeug einer zweiten Ausführungsform mit lineargeführtem Sekundärladeteil in einer Nichtladestellung,
- Fig. 5: die Ladevorrichtung aus Fig. 4 mit in der Ladestellung befindlichem Sekundärladeteil, und
- Fig. 6: die Anordnung aus Fig. 5 in einer Frontansicht.

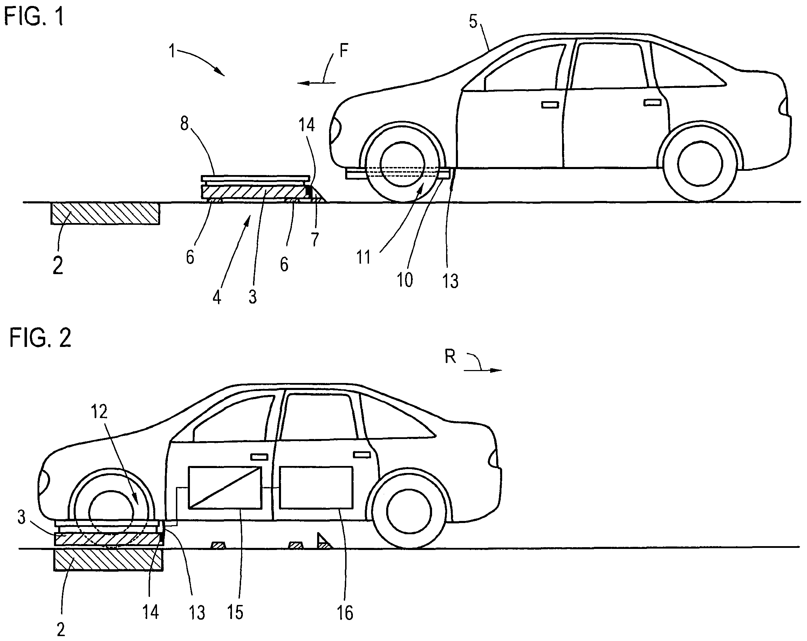

Fig. 1 zeigt eine erfindungsgemäße Ladevorrichtung 1, umfassend ein Primärteil 2, das mit einer nicht näher gezeigten Stromquelle verbunden ist. Die Stromquelle liefert den zum induktiven Laden erforderlichen Wechselstrom.

Vorgesehen ist ferner ein Sekundärladeteil 3, das in einer Halterungsvorrichtung 4 lösbar aufgenommen ist. Während das Primärladeteil 2 bodenseitig eingelassen und im Wesentlichen bündig vorgesehen ist, sitzt das Sekundärladeteil 3 auf. Es befindet sich in horizontaler Richtung zum Beispiel ca. 30 cm in Fahrtrichtung F des gezeigten Fahrzeugs 5 vor dem Primärladeteil 2 und in vertikaler Richtung gesehen in einem geringen Abstand darüber, beispielsweise ca. 5 cm.

Die Haltervorrichtung 4 umfasst im gezeigten Beispiel zwei das Sekundärladeteil 4 tragende Aufnahmen 6 sowie einen rückwärtigen Anschlag 7. In der gezeigten Nichtladestellung ruht das Sekundärladeteil 3 auf den Aufnahmen 6, es liegt am Anschlag 7 an.

Zur temporären mechanischen und elektrischen Verbindung des Sekundärladeteils mit dem Fahrzeug 5 ist eine Kopplungsvorrichtung 12 vorgesehen. Diese umfasst diverse Kopplungselemente und Kontakte.

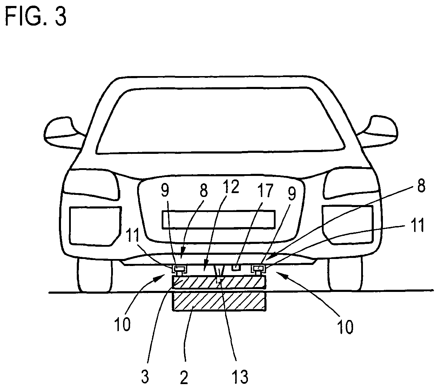

Am Sekundärladeteil 3 sind zwei Kopplungselemente 8 (siehe Fig. 3) vorgesehen, die im Bereich der Seiten des plattenförmigen, im Wesentlichen rechteckigen Sekundärladeteils 3 angeordnet sind. Diese Kopplungselemente 8 sind als im Querschnitt T-förmige Eingriffsschienen 9 ausgeführt (siehe Fig. 3). Sie dienen dem Zusammenwirken mit am Fahrzeug 5 im Bereich des Unterbodens angeordneten weiteren Kopplungselementen 10. Es sind, der Anzahl der sekundärladeteilseitigen Kopplungselemente 8 entsprechend, zwei Kopplungselemente 10 in Form von beidseits hinterschnittenen Aufnahmeschienen 11 vorgesehen (siehe wiederum Fig. 3). Die Geometrie der Aufnahmeschienen 11 und der Eingriffsschiene 9 ist derart, dass die Eingriffsschienen 9 in die Aufnahmeschiene 11 geschoben werden können, so dass es zu einem Hintergriff der C-förmigen Aufnahmeschienen 11 durch die T-förmigen Eingriffsschienen 9 kommt.

Fahrzeugseitig vorgesehen ist ferner ein der elektrischen Verbindung dienendes Kopplungselement in Form eines Schleif- oder Federkontaktes 13. Dieser dient zum lösbaren elektrischen Verbinden des Fahrzeugs mit einem entsprechenden Gegenkontakt 14 am Sekundärladeteil 3, der im Bereich des hinteren stirnseitigen Endes des Sekundärladeteils 3 vorgesehen ist. Der Schleif- oder Federkontakt 13 ist mit einem entsprechenden Stromwandler 15 verbunden, der seinerseits mit einer Hochvoltbatterie 16 verbunden ist, die zu laden ist.

Ausgehend von Fig. 1 wird nun der Vorgang zum Laden der Batterie 16 erläutert.

Das Fahrzeug 5 fährt in Richtung der ausgezeichneten Vorwärtsfahrtrichtung F und bewegt sich langsam an das Sekundärladeteil 3 heran. Das Fahrzeug fährt derart ausgerichtet, dass mit zunehmender Annäherung die T-förmigen Eingriffsschienen 9 in die C-förmigen Aufnahmeschienen 11 eingeführt werden. Die Aufnahmeschienen 11 können zu diesem Zweck im Bereich ihres vorderen Endes aufgeweitet sein, so dass sich quasi weite Einführabschnitte ausbilden, die ein "einfädeln" der T-förmigen Eingriffsschienen 9 auch dann ermöglichen, wenn die Schienen 9 und 11 nicht exakt fluchten. Für diesen Zweck ist das Sekundärladeteil 3 etwas seitlich verschiebbar auf den Aufnahmen 6 gelagert.

Fährt das Fahrzeug 5 weiter, so werden die T-förmigen Eingriffsschienen 9 vollständig in den C-förmigen hinterschnittenen Aufnahmeschienen 11 aufgenommen, sie laufen gegen einen entsprechenden Schienenanschlag. Zu diesem Zeitpunkt liegt auch bereits der Schleif- oder Federkontakt 13 am Gegenkontakt 14 an, so dass hierüber die elektrische Verbindung sichergestellt ist, während der Schieneneingriff die mechanische Verbindung darstellt.

Setzt das Fahrzeug 5 nun seine Fahrt fort, so wird das Sekundärladeteil 3, das mechanisch tragend nunmehr in den Aufnahmeschienen 11 aufgenommen respektive "aufgehängt" ist, aus der Halterung 4 gelöst und herausbewegt. Es wird mit Fortsetzung der Geradeausfahrt horizontal in Richtung des Primärladeteils 2 bewegt und über dieses geführt, bis die Ladestellung gemäß Fig. 2 erreicht ist. Das Erreichen dieser Stellung kann sensorisch erfasst und angezeigt werden. In dieser liegt das Sekundärladeteil 3 vollständig oberhalb des Primärladeteils 2. Der Abstand zwischen Primär- und Sekundärladeteil 2, 3 beträgt nur wenige Zentimeter, beispielsweise 5 cm oder weniger, so dass eine effiziente induktive Kopplung gegeben ist. Aufgrund der Bestromung des Primärladeteils 2 kommt es nun zu einer induktiven Kopplung zwischen Primär- und Sekundärladeteil 2, 3. Der induzierte Strom dient der Ladung der Batterie 16.

Ist der Ladevorgang beendet, so fährt das Fahrzeug 5 wieder rückwärts, wie durch den Pfeil R in Fig. 2 angedeutet. Hierbei wird das Sekundärladeteil 3 wiederum horizontal mitgenommen, also aus seiner Überdeckung des Primärladeteils 2 wieder in Richtung Haltevorrichtung 4 bewegt. Dies geschieht solange, bis das Sekundärladeteil 3 an den Anschlag 7 anschlägt. Das Fahrzeug 5 fährt weiter zurück, es kommt zu einem Lösen des Schleif- oder Federkontakts 13 vom Gegenkontakt 14 und damit zu einem Öffnen der elektrischen Verbindung. Gleichzeitig werden, nachdem das Sekundärladeteil 3 am Anschlag 7 anliegt, auch die hinterschnittenen Aufnahmeschienen 11 von den T-förmigen Eingriffsschienen 9 gezogen, bis das Sekundärladeteil 3 vollständig vom Fahrzeug gelöst ist und auf der Haltevorrichtung 4 ruht. Das Fahrzeug 5 kann nun im geladenen Zustand seine Fahrt fortsetzen.

Wie der Darstellung gemäß Fig. 3 zu entnehmen ist, ist im gezeigten Beispiel ein Sensorelement 17 vorgesehen, wobei natürlich auch mehrere solcher Sensorelemente 17 vorgesehen sein können. Das oder die Sensorelemente 17 dienen der Erfassung des Kopplungszustands der mechanischen und elektrischen Kopplung. Hierüber wird erfasst, ob zum einen die Kopplungen beim Überfahren des Sekundärladeteils 3 korrekt geschlossen werden, mithin also das Sekundärladeteil 3 sicher und korrekt tragend am Fahrzeug 5 aufgenommen wird wie auch der elektrische Kontakt über die Kontakte 13, 14 korrekt geschlossen wird. Denn nur dann macht eine Fortsetzung des Ladevorgangs Sinn. Kommt es hierbei zu einem Fehler, so wird über das Sensorelement 17 ein Signal an eine Warnvorrichtung gegeben, die ein optisches und/oder akustisches Signal an den Fahrer ausgibt, dass dieser sofort den Fahrvorgang abbricht. Denkbar ist es auch, dass über dieses Signal ein automatischer Eingriff in den Antriebsstrang angesteuert wird, mithin also das Fahrzeug sofort zwangsgebremst wird.

Entsprechendes geschieht im Falle der Rückwärtsfahrt, wenn das Sekundärladeteil 3 am Anschlag 7 anliegt und die elektrische und mechanische Kopplung gelöst wird. Kommt es hierbei zu einem Fehler, insbesondere im Bereich der mechanischen Kopplung, öffnet diese sich also nicht korrekt, so wird dies ebenfalls über das oder die Sensorelemente 17 erfasst und ein entsprechendes Warnsignal gegeben oder ein aktiver Antriebseingriff vorgenommen. Denn eine Weiterfahrt könnte zu einer Beschädigung der Ladevorrichtung 1 führen.

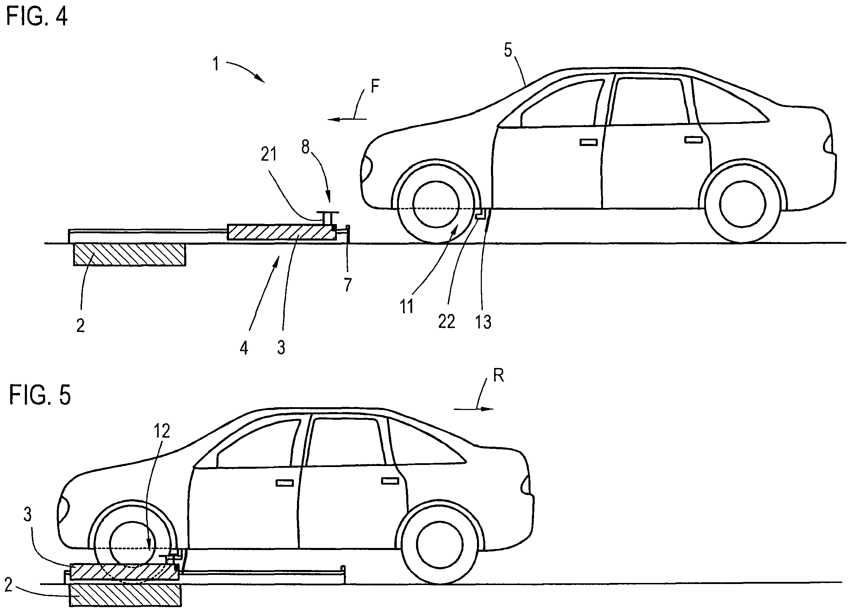

Fig. 4 zeigt eine weitere erfindungsgemäße Ausgestaltung einer Ladevorrichtung 1, wobei für gleiche Bauteile gleiche Bezugszeichen verwendet werden.

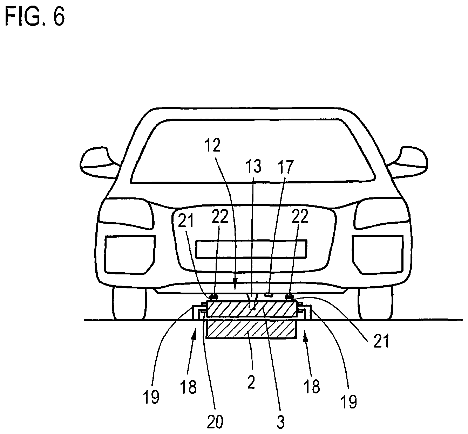

Vorgesehen ist wiederum ein Primärladeteil 2, das bodenseitig stationär verbaut ist. Es ist ebenfalls plattenförmig und großflächig ausgeführt, wie auch das vorgesehene Sekundärladeteil 3, das wiederum auf einer Haltevorrichtung 4 angeordnet ist. Diese Haltevorrichtung 4 umfasst im gezeigten Ausführungsbeispiel jedoch zwei Linearführungen 18 (siehe Fig. 6), umfassend zwei Führungsschienen 19, die bodenseitig vorgesehen sind, sowie entsprechende Gleit- oder Rolllagerungen 20 an der Unterseite des Sekundärladeteils 3, über welche das Sekundärladeteil 3 auf den Schienen 19 linear geführt ist.

Auch hier ist eine Kopplungsvorrichtung 12 umfassend diverse Kopplungselemente zur mechanischen Kopplung sowie Kontakte zur elektrischen Kopplung vorgesehen.

An der Oberseite des Sekundärladeteils 3 sind wiederum zwei Kopplungselemente 8 vorgesehen, hier jedoch in Form zweier vorspringender Zapfen 21. Diese dienen der Herstellung einer mechanischen Verbindung zum Fahrzeug 5, an dessen Unterseite ebenfalls Kopplungselemente 11 vorgesehen sind, hier jedoch in Form von Klemm- oder Rastklammern 22, die der lösbaren Klemm- oder Rastverbindung mit den Zapfen 21 dienen. Zur elektrischen Verbindung ist wiederum ein Kontakt 12, beispielsweise wiederum in Form eines Schleif- oder Federkontakts 13 sowie ein entsprechender Gegenkontakt 14 an dem Sekundärladeteil 3 vorgesehen.

Zum Laden nähert sich das Fahrzeug 5 wiederum in Richtung des Pfeils F dem Sekundärladeteil 3, bis die offenen Rast- oder Klemmklammern 22 gegen die Zapfen 21 laufen und diese dabei greifen. Bei einer Fortsetzung der Fahrt wird das Sekundärladeteil 3 auf den Linearführungen 18 horizontal längsverschoben, bis es in die Ladeposition gemäß Fig. 5 gelangt. Eine tragende Verbindung ist hier nicht erforderlich, da die Linearführungen 18 das Sekundärladeteil 3 stützen. Zum Fahrzeug 5 ist lediglich eine schiebende und für das Rückführen ziehende mechanische Verbindung zu realisieren, um die horizontale Schiebe- und Ziehbewegung zu ermöglichen.

Dabei können auch hier selbstverständlich die Rast- oder Klemmklammern 22 entsprechend weit in ihrer Aufnahmeöffnung ausgelegt sein, um einen etwaigen Seitenversatz ausgleichen zu können. Denkbar ist es aber auch, die Zapfen 21 horizontal beweglich, also schwimmend zu lagern, um einen Seitenversatz ausgleichen können, nachdem das Sekundärladeteil 3 selbst aufgrund der Kopplung zu den Linearführungen 18 nicht seitlich versetzbar ist.

Nach Beendigung des Ladevorgangs fährt das Fahrzeug wieder in Richtung des Pfeils R zurück. Aufgrund der Klemm- oder Rastverbindung zwischen den Klammern 22 und den Zapfen 21 wird das Sekundärladeteil 3 wieder entlang der Linearführungen 18 zurückgezogen. Es läuft gegen den auch hier vorgesehenen Anschlag 7. Es kommt zur Öffnung der Rast- oder Klemmverbindung, d. h., die Klammern 22 öffnen sich, das Sekundärladeteil 3 wird freigegeben, wie auch die elektrische Verbindung der Kontakte 13 und 14 geöffnet wird.

Vorgesehen ist auch hier natürlich ein oder sind mehrere entsprechende Sensorelemente, die das korrekte Schließen und Öffnen der elektrischen und/oder mechanischen Kopplungen überwachen.

## Patentansprüche

1. Ladevorrichtung zum induktiven Laden eines Energiespeichers (16) eines Fahrzeugs, umfassend ein mit einer Stromquelle verbundenes Primärladeteil und ein mit dem Energiespeicher (16) zu verbindendes Sekundärladeteil, wobei das Primärladeteil (2) bodenseitig stationär angeordnet ist, **dadurch gekennzeichnet, dass** das in einer Haltevorrichtung (4) aufgenommene Sekundärladeteil (3) zwischen einer Nichtladestellung und einer Ladestellung bewegbar ist, wozu das Sekundärladeteil (3) mit wenigstens einer im Unterbodenbereich des Fahrzeugs (5) angeordneten Kopplungsvorrichtung (12) beim Überfahren derart mechanisch und elektrisch lösbar mit dem Fahrzeug (5) verbindbar ist, dass es zum Laden bei weiterer Überfahrt über das Primärladeteil (2) in die Ladestellung und am Ende des Ladevorgangs bei Zurückfahren des Fahrzeugs (5) in die Nichtladestellung unter Lösen der mechanischen und elektrischen Verbindung bewegbar ist.

2. Ladevorrichtung nach Anspruch 1,
**dadurch gekennzeichnet,**
**dass** das Primärladeteil (2) und das Sekundärladeteil (3) plattenförmig sind.

3. Ladevorrichtung nach Anspruch 1 oder 2,
**dadurch gekennzeichnet,**
**dass** das Sekundärladeteil (3) nach der mechanischen Verbindung mit der Kopplungsvorrichtung (12) beim Weiterfahren aus der Haltevorrichtung (4) gelöst und beim Zurückfahren wieder in die Haltevorrichtung (4) übergeben wird.

4. Ladevorrichtung nach Anspruch 3,
**dadurch gekennzeichnet,**
**dass** die Kopplungsvorrichtung (12) zur mechanischen Verbindung ein oder mehrere erste Kopplungselemente (10) aufweist, das oder die mit einem oder mehreren am Sekundärladeteil (3) vorgesehenen zweiten Kopplungselementen (8) tragend zusammenwirken.

5. Ladevorrichtung nach Anspruch 4,
**dadurch gekennzeichnet,**
**dass** die beiden zusammenwirkenden Kopplungselemente (8, 10) beim Überfahren ineinander eingreifen oder ineinander geschoben werden.

6. Ladevorrichtung nach Anspruch 4 oder 5,
**dadurch gekennzeichnet,**
**dass** ein erstes Kopplungselemente (10) als hinterschnittene Aufnahmeschiene (11) und ein zweites Kopplungselement (8) als T-förmige Eingriffschiene (9), die mit ihrem T-förmigen Schienenabschnitt in die Aufnahmeschiene (11) eingeführt wird, ist, oder umgekehrt.

7. Ladevorrichtung nach einem der Ansprüche 4 bis 6,
**dadurch gekennzeichnet,**
**dass** an dem Kopplungselement (10), das das andere Kopplungselement (8) umgreift oder aufnimmt, ein Einführabschnitt vorgesehen ist.

8. Ladevorrichtung nach Anspruch 1 oder 2,
**dadurch gekennzeichnet,**
**dass** das Sekundärladeteil (3) in der Haltevorrichtung (4) auf wenigstens einer Linearführung (18) geführt zwischen der Nichtladestellung und der Ladestellung bewegbar ist.

9. Ladevorrichtung nach Anspruch 8,
**dadurch gekennzeichnet,**
**dass** die Kopplungsvorrichtung (12) zur mechanischen Verbindung ein oder mehrere erste Kopplungselemente (10) aufweist, das oder die mit einem oder mehreren am Sekundärteil (3) vorgesehenen zweiten Kopplungselementen (8) schiebend und ziehend zusammenwirken.

10. Ladevorrichtung nach Anspruch 9,
**dadurch gekennzeichnet,**
**dass** die beiden Koppelelemente (8, 10) eine Klemm- oder Rastverbindung eingehen.

11. Ladevorrichtung nach einem der vorangehenden Ansprüche,
**dadurch gekennzeichnet,**
**dass** die Haltevorrichtung (4) einen Anschlag (7) aufweist, gegen den das Sekundärladeteil (3) beim Rückwärtsfahren bei Erreichen der Nichtladestellung läuft.

12. Ladevorrichtung nach einem der vorangehenden Ansprüche,
**dadurch gekennzeichnet,**
**dass** die Kopplungsvorrichtung (12) wenigstens ein Schleif- oder Federkontakt (13) aufweist, der zur elektrischen Verbindung mit einem entsprechenden Kontakt (14) am Sekundärladeteil (3) zusammenwirkt, oder umgekehrt.

13. Ladevorrichtung nach einem der vorangehenden Ansprüche,
**dadurch gekennzeichnet,**
**dass** ein oder mehrere Sensorelemente (17) zur Erfassung einer mechanischen und elektrischen Kopplung vorgesehen ist.

14. Ladevorrichtung nach Anspruch 13,
**dadurch gekennzeichnet,**
**dass** bei Erfassung einer nicht erfolgten mechanischen oder elektrischen Trennung bei Erreichen der Nichtladestellung ein Warnsignal ausgebbar und/oder ein die Fortsetzung der Rückwärtsfahrt verhinderndes Signal ausgebbar ist.

## Claims

1. Charging device for the inductive charging of an energy store (16) of a vehicle, comprising a primary charging part connected to a power source and a secondary charging part to be connected to the energy store (16), the said primary charging part (2) being arranged on the ground, **characterised in that** the secondary charging part (3) accommodated in a holding device (4) is movable between a non-charging position and a charging position, for which purpose the secondary charging part (3) can be releasably mechanically and electrically connected to the vehicle (5) via at least one coupling device (12) arranged in the underbody area of the vehicle (5) when the vehicle drives over, that for charging when the vehicle continues to drive over the primary charging part (2) it is movable to the charging position and at the end of the charging procedure when the vehicle (5) is driven back to the non-charging position it is movable with the release of the mechanical and electrical connection.

2. Charging device according to claim 1, **characterised in that** the primary charging part (2) and the secondary charging part (3) are plate-shaped.

3. Charging device according to claim 1 or 2, **characterised in that** the secondary charging part (3) after the mechanical connection to the coupling device (12) is released from the holding device (4) when the vehicle drives on and is delivered again to the holding device (4) when the vehicle drives back.

4. Charging device according to claim 3, **characterised in that** the coupling device (12) for the mechanical connection comprises one or more first coupling elements (10), which co-operate in a supporting manner with one or more second coupling elements (8) provided on the secondary charging part (3).

5. Charging device according to claim 4, **characterised in that** both co-operating coupling elements (8, 10) engage with or are inserted into one another when they are driven over.

6. Charging device according to claim 4 or 5, **characterised in that** a first coupling element (10) is formed as an undercut receiving rail (11) and a second coupling element (8) is formed as a T-shaped engagement rail (9), which is inserted with its T-shaped rail section into the receiving rail (11), or vice versa.

7. Charging device according to any one of claims 4 to 6, **characterised in that** an insertion section is provided on the coupling element (10), which encompasses or accommodates the other coupling element (8).

8. Charging device according to claim 1 or 2, **characterised in that** the secondary charging part (3) is movably guided in the holding device (4) on at least one linear guide (18) between the non-charging position and the charging position.

9. Charging device according to claim 8, **characterised in that** the coupling device (12) for the mechanical connection comprises one or more first coupling elements (10), which co-operate in a sliding or tractive manner with one or more second coupling elements (8) provided on the secondary coupling part (3).

10. Charging device according to claim 9, **characterised in that** the two coupling elements (8, 10) engage in a clamping or snap-lock connection.

11. Charging device according to any one of the preceding claims, **characterised in that** the holding device (4) comprises a stop means (7), against which the secondary charging part (3) impacts in the reverse driving movement when the non-charging position is reached.

12. Charging device according to any one of the preceding claims, **characterised in that** the coupling device (12) comprises at least one sliding contact or spring contact (13), which co-operates for the electrical connection with a corresponding contact (14) on the secondary charging part (3), or vice versa.

13. Charging device according to any one of the preceding claims, **characterised in that** one or more sensor elements (17) are provided for detecting a mechanical and electrical coupling.

14. Charging device according to claim 13, **characterised in that** if an unsuccessful mechanical or electrical separation is detected when the non-charging position is reached, a warning signal is emitted and/or a signal preventing the continuation of the reverse movement is emitted.

## Revendications

1. Dispositif de chargement pour charger par induction une batterie (16) d'un véhicule, comprenant une partie de chargement primaire reliée à une source de courant et une partie de chargement secondaire à relier à la batterie (16), la partie de chargement primaire (2) étant agencée, fixe, du côté du sol, **caractérisé en ce que** la partie de chargement secondaire (3) logée dans un dispositif de support (4) peut être déplacée entre une position de non-chargement et une position de chargement, ce pour quoi la partie de chargement secondaire (3) peut, avec au moins un dispositif de couplage (12) agencé dans la zone de dessous de caisse du véhicule (5), être reliée au véhicule (5) de manière mécaniquement et électriquement amovible lorsque le véhicule passe dessus de telle sorte qu'elle peut être déplacée en vue du chargement avec la poursuite du passage du véhicule au-dessus de la partie de chargement primaire (2) jusque dans la position de chargement et être déplacée à la fin de l'opération de chargement avec le recul du véhicule (5) jusque dans la position de non-chargement tout en coupant la liaison mécanique et électrique.

2. Dispositif de chargement selon la revendication 1, **caractérisé en ce que** la partie de chargement primaire (2) et la partie de chargement secondaire (3) sont en forme de plaques.

3. Dispositif de chargement selon la revendication 1 ou 2, **caractérisé en ce que** la partie de chargement secondaire (3) après la liaison mécanique avec le dispositif de couplage (12) est détachée du dispositif de support (4) lors de la poursuite du déplacement et est à nouveau prise en charge dans le dispositif de support (4) lors du recul.

4. Dispositif de chargement selon la revendication 3, **caractérisé en ce que** le dispositif de couplage (12) comporte en vue de la liaison mécanique un ou plusieurs premiers éléments de couplage (10) qui coopèrent de manière porteuse avec un ou plusieurs deuxièmes éléments de couplage (8) prévus au niveau de la partie de chargement secondaire (3).

5. Dispositif de chargement selon la revendication 4, **caractérisé en ce que** les deux éléments de couplage (8, 10) qui coopèrent pénètrent l'un dans l'autre ou sont poussés l'un dans l'autre lors du passage au-dessus du système.

6. Dispositif de chargement selon la revendication 4 ou 5, **caractérisé en ce qu'**un premier élément de couplage (10) est conçu sous la forme d'un rail de logement (11) avec une forme rentrante et un deuxième élément de couplage (8) est conçu sous la forme d'un rail d'introduction (9) avec une forme de T qui est introduit avec sa partie de rail en forme de T dans le rail de logement (11), ou inversement.

7. Dispositif de chargement selon l'une des revendications 4 à 6, **caractérisé en ce qu'**un tronçon d'introduction est prévu au niveau de l'élément de couplage (10) qui entoure ou loge l'autre élément de couplage (8).

8. Dispositif de chargement selon la revendication 1 ou 2, **caractérisé en ce que** la partie de chargement secondaire (3) dans le dispositif de support (4) peut être déplacée, guidée sur au moins un guide linéaire (18), entre la position de non-chargement et la position de chargement.

9. Dispositif de chargement selon la revendication 8, **caractérisé en ce que** le dispositif de couplage (12) comporte en vue de la liaison mécanique un ou plusieurs premiers éléments de couplage (10) qui coopèrent en poussant ou en tirant avec un ou plusieurs deuxièmes éléments de couplage (8) prévus au niveau de la partie secondaire (3).

10. Dispositif de chargement selon la revendication 9, **caractérisé en ce que** les deux éléments de couplage (8, 10) constituent une liaison par serrage ou par crantage.

11. Dispositif de chargement selon l'une des revendications précédentes, **caractérisé en ce que** le dispositif de support (4) comporte une butée (7) contre laquelle arrive la partie de chargement secondaire (3) lors du recul lorsque la position de non-chargement est atteinte.

12. Dispositif de chargement selon l'une des revendications précédentes, **caractérisé en ce que** le dispositif de couplage (12) comporte au moins un contact à boucle ou à ressort (13) qui coopère en vue de la liaison électrique avec un contact correspondant (14) au niveau de la partie de chargement secondaire (3), ou inversement.

13. Dispositif de chargement selon l'une des revendications précédentes, **caractérisé en ce qu'**un ou plusieurs éléments capteurs (17) sont prévus pour détecter un couplage mécanique et électrique.

14. Dispositif de chargement selon la revendication 13, **caractérisé en ce que**, lors de la détection d'une séparation mécanique ou électrique non effectuée lorsque la position de non-chargement est atteinte, un signal d'avertissement peut être délivré et/ou un signal empêchant la poursuite du recul peut être délivré.
